# EUROPÄISCHE PATENTSCHRIFT

(11) **EP 1 256 248 B1**
(45) Veröffentlichungstag und Bekanntmachung des Hinweises auf die Patenterteilung: **18.03.2009**
(21) Anmeldenummer: 02717958.9
(22) Anmeldetag: 20.02.2002
(51) Int. Cl.: H04W 24/00

(54) **VERFAHREN ZUM TESTEN DER NETZQUALITÄT IN MOBILFUNKNETZEN**
METHOD FOR TESTING THE QUALITY OF MOBILE RADIO NETWORKS
PROCEDE POUR TESTER LA QUALITE DE RESEAUX DE TELEPHONIE MOBILE

(30) Priorität: 20.02.2001 DE 10108158
(43) Veröffentlichungstag der Anmeldung: 13.11.2002
(73) Patentinhaber: T-Mobile Deutschland GmbH, 53227 Bonn (DE)
(72) Erfinder: ADAM, Rüdiger, 53819 Neunkirchen-Seelscheid (DE); NIEMEYER, Jens, 53773 Hennef (DE); SCHINDLER, Andreas, 53757 Sankt-Augustin (DE)
(74) Vertreter: Riebling, Peter
(86) Internationale Anmeldenummer: PCT/DE2002/000593
(87) Internationale Veröffentlichungsnummer: WO 2002/067615

(56) Entgegenhaltungen:
- EP-A- 0 567 439
- WO-A-00/38464

## Beschreibung

Die Erfindung betrifft ein Verfahren zum Testen der Netzqualität in Mobilfunknetzen nach dem Oberbegriff des Patentanspruchs 1.

Entsprechend dem Stand der Technik werden bei den Mobilfunknetzbetreibern im wesentlichen zwei Arten von Netzqualitätsuntersuchungen durchgeführt. Zum einen rein technische Messungen mit automatischen/halbautomatischen, festinstallierten oder mobilen Systemen bzw. Testmobilstationen, z.B. QVoice von Fa. Ascom, und zum anderen in periodischen Abständen Teilnehmertracking/-Befragungen durch den Netzbetreiber über die vom Teilnehmer empfundene Netzqualität. Die DE 198 20 845 A1 offenbart ein solches Verfahren zum Testen der Qualität in Mobilfunknetzen, wobei der Mobilfunkteilnehmer die von ihm z.B. während einer Verbindung wahrgenommene Netzqualität erfasst und an eine Zentrale übermittelt.

Bei den Teilnehmerbefragungen über die Netzqualität besteht jedoch das Problem, dass das Empfinden der Kunden bzw. Teilnehmer in der Regel subjektiven Einflüssen, wie z.B. Image des Netzbetreibers, Werbung, etc. unterliegt, und somit der Netzbetreiber keine objektive sondern eine mehr oder weniger verfälschte Aussage über die tatsächliche Netzqualität erhält.

EP 0 567 439 A1 offenbart ein Verfahren zum Vergleich der subjektiven Dialogqualität in Mobiltelefonsystemen, wobei seitens der Mobilstationen und der Vermittlungsstellen eine Sprachnachricht als "Referenznachricht" mit einer über das Mobiltelefonsystem übertragenen Sprachnachricht verglichen wird.
WO 00 38464 A2 offenbart ein Verfahren zur Bestimmung der Sprachqustität Hierbei werden die Bitfehlerrate und die Fadingfrequenz auf dem Funkkanal gemessen und anhand von zuvor bei Benutzern experimentell ermittelten Qualitätsvergleichsdaten ausgewertet.

Das Ergebnis ist eine Annäherung an die von den Benutzern empfundene Sprachqualität.
Die beiden oben genannten Verfahren basieren nicht auf einer unmittelbaren Befragung von Testteilnehmern über die Sprachqualität. Ein von subjektiven Einflüssen der Testeilnehmer unabhängiger Vergleich der Sprachqualität mehrerer unterschiedlicher Mobiltelefonnetze ist somit nicht möglich.

Die Aufgabe der Erfindung besteht darin, ein Verfahren zum Testen der Qualität in Mobilfunknetzen basierend auf einer Befragung von Testteilnehmern anzugeben, welches subjektive Einflüsse bei der Qualitätsbeurteilung möglichst ausschließt.

Die Aufgabe wird durch die Merkmale des Patentanspruchs 1 gelöst.

Die Erfindung zeichnet sich dadurch aus, dass eine Anzahl von Testteilnehmern mit Mobilfunkendgeräten ausgerüstet wird, denen jeweils eine spezielle Rufnummer zugeordnet ist, wobei jeder Testteilnehmer über jeweils ein individuell aus einer Menge von mehreren Mobilfunknetzen ausgewähltes Mobilfunknetz kommunizieren kann. Das ausgewählte Mobilfunknetz wird gegenüber dem Testteilnehmer anonym gehalten und in bestimmten Zeitabständen gewechselt, wobei eine zeitnahe Erfassung der von den Teilnehmern wahrgenommenen Netzqualität durchgeführt wird.

Der Vorteil der Erfindung besteht darin, dass durch die Anonymisierung der Mobilfunknetze das Einfangen des direkten Kundenempfindens für die Netzqualität unter Ausschluss subjektiver Einflüsse, wie z.B. Image, Werbung, Gruppenzwang etc. möglich wird. Des weiteren vereint das erfindungsgemäße Verfahren die Vorteile der herkömmlichen Methoden zur Qualitätsuntersuchung, also der objektive Messdatenerfassung und der Rückmeldung aus Teilnehmersicht, und schließt gleichzeitig deren Nachteile weitgehend aus, wie z.B. die Rückmeldung einer "maschinell" bewerteten Gesprächsqualität und die Beeinflussung der Kundenrückmeldung durch das Image des Netzbetreibers, Werbung.

Das erfindungsgemäße Verfahren zur Testen von Mobilfunknetzen ist also gekennzeichnet durch:
- Anonymisierte Netze
- Regelmäßiger Wechsel der Netze
- Zeitnahe Erfassung der Netzqualitätseindrücke durch regelmäßige Interviews

Eine Anonymisierung der Mobilfunknetze kann erfindungsgemäß erfolgen durch:
- Sperrung bestimmter Rufnummernbereiche, um die betreiberspezifischen Ansagen zu unterdrücken (Umkehrung: Nur Zulassung der Vorwahlbereiche 02xx bis 09xx).
- Sperrung der betreiberspezifischen Kurzwahlnummern.
- Endgerätespezifische technische Merkmale/Features, die die Sperrung aufheben, sind zu unterdrücken.
- Blocking Display mit den automatisierten Angaben der Netzbetreiber und Service Providern.
- Unterdrückung der automatischen/manuellen Netzwahl (Umkehrung: voreingestellte Netzauswahl).
- Sperrung der Merkmale, wie SMS (MO, MT, CB), mit denen die eigene Rufnummer ausgelesen oder angezeigt werden kann.
- Veränderung der Telekartenprofile mit folgenden Diensten: nur Telefonie Inland, kein International Roaming abgehend/kommend, keine Mailbox, kein Fax/Datendienst, kein SMS, permanente Identifikationsunterdrückung CLIR (Calling Line Identification Restriction), keine Rufumleitung, Blocking 0180/0190-Nummern.

In einer bevorzugten Ausführungsform der Erfindung wird die Erreichbarkeit des jeweiligen Testteilnehmers über eine ihm persönlich zugeordnete, virtuelle Rufnummer während des gesamten Untersuchungszeitraumes sichergestellt. Es erfolgt jeweils eine Rufumleitung dieser virtuellen Rufnummer auf betreiberspezifische Telekarten/-rufnummer (SIM-Kartennummer), d.h. auf ein bestimmtes Mobilfunknetz. Beim Wechsel des Mobilfunknetzes erfolgt ein zyklischer Tausch der betreiberspezifischen Telekarten/-rufnummern mit entsprechender Anpassung der Rufumleitung. Eine weitere Möglichkeit ist, den Tausch durch Austausch der identischen und ggf. versiegelten Mobilfunkendgeräte incl. der zugehörigen Telekarten durchzuführen, z.B. während regelmäßiger Gerätewartung und dadurch für den Testteilnehmer nicht nachvollziehbar.

Vorzugsweise wird eine zentrale, neutrale Interviewerstelle (Agentur) eingerichtet, über die eine tägliche, wöchentliche bzw. monatliche Befragung und Hotline-Betreuung der Testteilnehmer durchgeführt werden kann. Die Erfassung, Aufbereitung und Auswertung der Ergebnisse erfolgt ebenfalls durch diese oder eine andere Agentur

Bei der Befragung der Testteilnehmer werden sich ergänzende Fragebogen verwendet, wie ein täglicher, wöchentlicher, monatlicher nach Netztausch und ein abschließender Fragenbogen bei Ende der Untersuchung.

Nachfolgend wird ein Ausführungsbeispiel der Erfindung anhand von Zeichnungsfiguren näher erläutert.
Aus den Zeichnungen und ihrer Beschreibung ergeben sich weitere Merkmale, Vorteile und Anwendungsmöglichkeiten der Erfindung.
Es zeigt:
- Figur 1: Aktivierung der Testteilnehmer in den verschiedenen Netzen;
- Figur 2:: Übersicht über die Verknüpfung der am Test beteiligten Instanzen und deren Zusammenspiel.

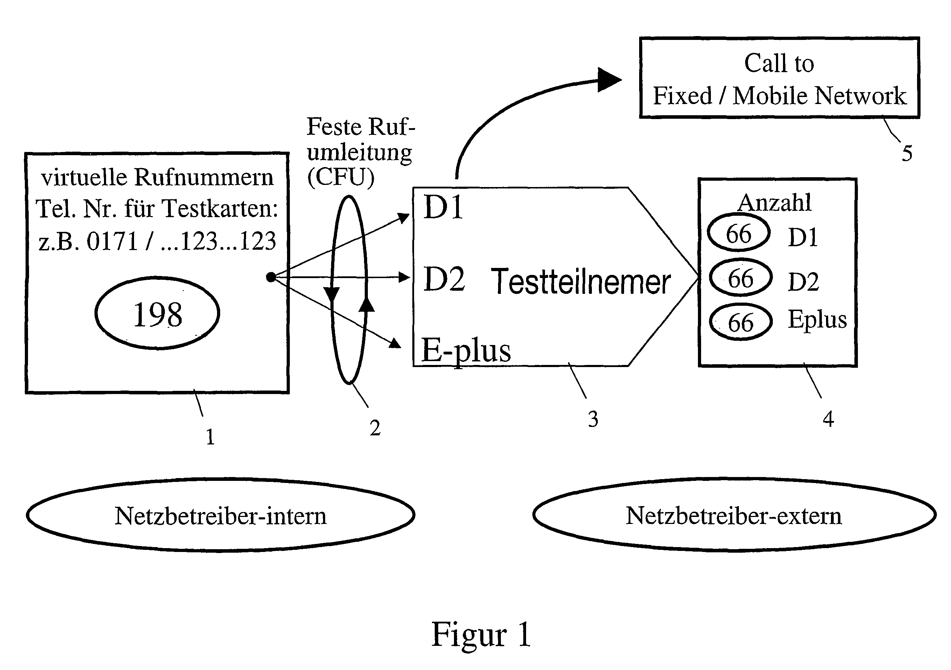

Gemäss Figur 1 wird vom Netzbetreiber eine bestimmte Anzahl, hier 198, virtuelle Mobilfunkrufnummern 1 bereitgestellt, die jeweils einer entsprechenden Anzahl von Testteilnehmern zugeordnet werden. Die Testteilnehmer sind während des Testteilnehmerverhältnisses unter ihrer jeweiligen virtuellen Rufnummer erreichbar, wobei diese Rufnummern so gewählt sind, dass keine Rückschlüsse auf das verwendete Mobilfunknetz - in Deutschland z.B. D1, D2 und Eplus - möglich sind. Die Rufnummern 1 der Testteilnehmer werden jeweils zu gleichen Teilen einem der Mobilfunknetze D1, D2 und Eplus, zugeordnet, d.h. der jeweilige Testteilnehmer kommuniziert ausschließlich über das ihm augenblicklich zugeordnete Mobilfunknetz. Hierfür ist die Einrichtung einer Rufumleitung 2 notwendig, welche die dem Teilnehmer zugeordnete virtuelle Rufnummer auf eine in jeweiligen Mobilfunknetz tatsächlich bestehende Rufnummer abbildet (3). Durch ändern der Rufumleitung 2 wird in bestimmten Zeitabständen das einem Teilnehmer zugeordnete Mobilfunknetz gewechselt. Ist zum Beispiel ist ein Testzeitraum von 3 Monaten vorgesehen, wird dem Testteilnehmer jeweils einen Monat eines der Mobilfunknetze D1, D2 und Eplus zur Nutzung freigeschaltet.
Es sind also immer jeweils 66 Teilnehmer in einem der Mobilfunknetze freigeschaltet, wobei die Netze zyklisch durchgetauscht werden, vgl. Ziffer 4.

Natürlich sind die Teilnehmer unter ihrer virtuellen Rufnummer nicht nur in den Mobilfunknetzen sondern auch aus den Festnetzen 5 erreichbar.

Die Zuordnung der virtuellen Rufnummern sowie die Rufumleitung wird vom Netzbetreiber bzw. einer beauftragten Agentur, die den Test durchführt, intern verwaltet.
Die Nutzung der für den Test vorgesehenen Mobilfunk- und Festnetze geschieht Netzbetreiber-extern.

Damit das von den Teilnehmern aktuell genutzte Mobilfunknetz anonym bleibt, werden für die Dauer des Tests alle Funktionen und Dienste gesperrt bzw. abgeschalten, die den Teilnehmern einen Hinweis auf das von ihm verwendete Mobilfunknetz geben könnten. Dies ist ein wichtiger Aspekt der Erfindung, da vermieden werden soll, dass die Teilnehmer ihr subjektives Empfindungen in das Testurteil einfließen lassen.
Um weitere subjektive Einflüsse auszuschließen, könnte auch der Hersteller der im Test verwendeten Mobilfunkendgeräte unkenntlich gemacht werden. Selbstverständlich werden alle Testteilnehmer mit dem selben Mobilfunkendgerät ausgerüstet.

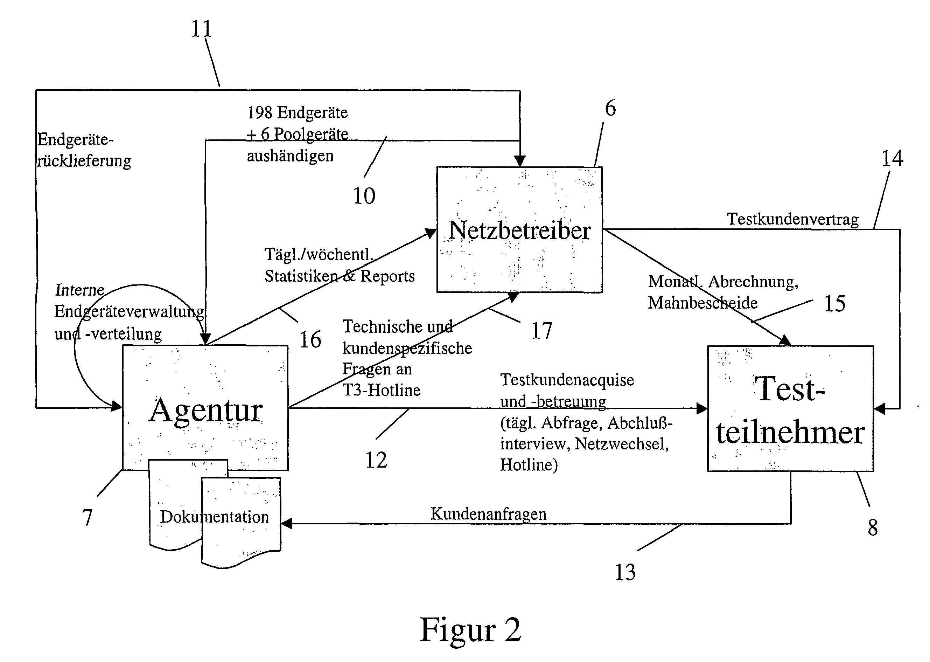

Figur 2 zeigt eine Übersicht über die Verknüpfung der am Test beteiligten Instanzen und deren Zusammenspiel.
Der Mobilfunknetzbetreiber 6 stellt der den Test durchführenden Agentur 7 eine Anzahl von Mobilfunkendgeräten zur Verfügung (10). Die Agentur 7 verwaltet diese Endgeräte und stellt sie den Testteilnehmern 8 zur Verfügung. Nach Beendigung des Tests werden die Endgeräte wieder an den Netzbetreiber zurückgegeben und stehen für nachfolgende Tests zur Verfügung (11).

Die Testteilnehmer 8 schließen mit dem Netzbetreiber 6 einen Testkundenvertrag ab (14), wobei sie eine Telekarte zum Betrieb des Endgerätes erhalten, welche ihre persönliche virtuelle Rufnummer enthält unter der Sie während des Tests erreichbar sind.
Auch die monatliche Abrechnung (15) erfolgt wie gewohnt über den Netzbetreiber 6.

Die Akquirierung der Testteilnehmer und deren Betreuung obliegt der beauftragten Agentur (12). Auch Kundenanfragen werden über eine spezielle Hotline von der Agentur verwaltet (13).
Ferner führt die Agentur 7 die regelmäßigen Befragungen der Testteilnehmer über die Netzqualität durch. Dies erfolgt schriftlich oder mündlich und wird vorzugsweise täglich sowie zum Abschluss der Testreihe durchgeführt (12). Auch der während des Tests durchgeführte Wechsel des von den Teilnehmern 8 verwendeten Mobilfunknetzes wird durch die Agentur 7 durchgeführt und gesteuert.

Die Agentur 7 liefert während des Testzeitraumes täglich bzw. wöchentlich Statistiken und Berichte über den Verlauf und das Ergebnis des Testes (16) an den Netzbetreiber 6.
Im Gegenzug berät der Netzbetreiber 6 die Agentur 7 bei technischen und teilnehmerspezifischen Fragen (17).

## Patentansprüche

1. Verfahren zum Testen der Qualität in Mobilfunknetzen auf Basis einer Befragung von Testteilnehmern, **dadurch gekennzeichnet,**
**dass** eine Anzahl von Testteilnehmer (8) mit Mobilfunkendgeräten ausgerüstet wird, denen jeweils eine spezielle, virtuelle Rufnummer (1) zugeordnet ist, wobei jeder Testteilnehmer über jeweils ein individuell aus einer Menge von mehreren Mobilfunknetzen (4) ausgewähltes Mobilfunknetz kommunizieren kann,
**dass** Maßnahmen getroffen werden, die eine Anonymität des ausgewählten Mobilfunknetzes (4) gegenüber dem Testteilnehmer gewährleisten, indem die virtuellen Rufnummern so gewählt werden,
**dass** keine Rückschlüsse auf das verwendete Mobilfunknetz möglich sind, und eine Rufumleitung (2) eingerichtet ist, welche die jedem Teilnehmer zugeordnete virtuelle Rufnummer einer betreiberspezifischen Rufnummer des ausgewählten Mobilfunknetzes (4) zuordnet, wobei für die Dauer des Tests alle Funktionen und Dienste gesperrt oder abgeschaltet werden, die den Teilnehmern einen Hinweis auf das verwendete Mobilfunknetz geben, dass das ausgewählte Mobilfunknetz (4) in bestimmten Zeitabständen gewechselt wird, und
**dass** eine Erfassung der von den Teilnehmern (8) wahrgenommenen Netzqualität durchgeführt wird.

2. Verfahren nach Anspruch 1, **dadurch gekennzeichnet, dass** die Mobilfunknetze (4) im Rotationsverfahren gewechselt werden.

3. Verfahren nach einem der vorhergehenden Ansprüche, **dadurch gekennzeichnet, dass** eine Anonymisierung der Mobilfunknetze erfolgt durch:
- Sperrung bestimmter Rufnummernbereiche, um die betreiberspezifischen Ansagen zu unterdrücken,
- Sperrung der betreiberspezifischen Kurzwahlnummern,
- Endgerätespezifische technische Merkmale/Features, die die Sperrung aufheben sind zu unterdrücken,
- Blocking Display mit den automatisierten Angaben der Netzbetreiber und Service Providern,
- Unterdrückung der automatischen/manuellen Netzwahl oder voreingestellte Netzauswahl,
- Sperrung der Merkmale, wie SMS (MO, MT, CB), mit denen die eigene Rufnummer ausgelesen oder angezeigt werden kann,
- Veränderung der Telekartenprofile mit folgenden Diensten: nur Telefonie Inland, kein International Roaming abgehend/kommend, keine Mailbox, kein Fax/Datendienst, kein SMS, permanente Identifikationsunterdrückung, keine Rufumleitung, Blocking 0180/0190-Nummern.

4. Verfahren nach einem der vorhergehenden Ansprüche, **dadurch gekennzeichnet, dass** die Mobilfunkendgeräte identisch und versiegelt sind.

5. Verfahren nach einem der vorhergehenden Ansprüche, **dadurch gekennzeichnet, dass** die Erfassung der Netzqualität durch tägliche, wöchentliche, monatliche und/oder zu einem beliebigen Zeitpunkt angesetzte Befragungen der Testteilnehmer (8) erfolgt.

6. Verfahren nach Anspruch 5, **dadurch gekennzeichnet, dass** die Befragung der Testteilnehmer (8) von einer neutralen, zentralen Stelle (12) durchgeführt wird.

7. Verfahren nach Anspruch 6, **dadurch gekennzeichnet, dass** in der zentralen Stelle (7) eine Erfassung, Aufbereitung und Auswertung der Ergebnisse der Befragungen durchgeführt wird.

## Claims

1. Method for testing quality in mobile communications networks based on a survey of test subscribers, **characterised in that** a number of test subscribers (8) is equipped with mobile communications terminal devices to each of which a special virtual call number (1) is allocated, wherein each test subscriber can communicate in each case over a mobile communications network individually selected from a set of several mobile communications networks (4),
that measures are taken which guarantee anonymity of the selected mobile communications network (4) with respect to the test subscriber **in that** the virtual call numbers are chosen so that no conclusions as to the mobile communications network used are possible, and call diversion (2) is set up which assigns the virtual call number allocated to each subscriber to an operator-specific call number of the selected mobile communications network (4), wherein for the duration of the test all functions and services are blocked or switched off which give the subscribers an indication of the mobile communications network used,
that the selected mobile communications network (4) is changed at certain intervals of time, and
that capture of the network quality perceived by the subscribers (8) is carried out.

2. Method according to claim 1, **characterised in that** the mobile communications networks (4) are changed in rotation.

3. Method according to any of the preceding claims, **characterised in that** anonymisation of the mobile communications network ensues by:
- blocking certain call number ranges in order to suppress operator-specific announcements,
- blocking the operator-specific abbreviated dialling numbers,
- technical characteristics/features specific to the terminal devices which cancel the blockage have to be suppressed,
- blocking display of automated details of network operators and service providers,
- suppression of automatic/manual network choice or preset network selection,
- blockage of characteristics such as SMS (MO, MT, CB) by means of which one's own call number can be read out or displayed,
- changing telecard profiles having the following services: only home country telephony, no international outgoing/incoming roaming, no mailbox, no fax/data service, no SMS, permanent suppression of identification, no call diversion, blocking of 0180/0190 numbers.

4. Method according to any of the preceding claims, **characterised in that** the mobile communications terminal devices are identical and sealed.

5. Method according to any of the preceding claims, **characterised in that** capture of the network quality ensues by means of surveys of the test subscribers (8) scheduled daily, weekly, monthly and/or for any desired time.

6. Method according to claim 5, **characterised in that** surveying of the test subscribers (8) is carried out by a neutral, central point (12).

7. Method according to claim 6, **characterised in that** in the central point (7) capture, processing and evaluation of the results of the surveys is carried out.

## Revendications

1. Procédé pour tester la qualité de réseaux de téléphonie mobile sur la base d'une interrogation d'abonnés tests,
**caractérisé en ce qu'**un certain nombre d'abonnés tests (8) sont équipés de terminaux de téléphonie mobile auxquels sont attribués des numéros d'appel virtuels spéciaux (1) respectifs, chaque abonné test pouvant communiquer par l'intermédiaire d'un réseau mobile sélectionné individuellement parmi plusieurs réseaux mobiles (4),
**en ce que** des mesures sont prises qui garantissent par rapport à l'abonné test l'anonymat du réseau mobile (4) choisi, grâce au fait que les numéros d'appel virtuels sont choisis de telle sorte qu'aucune conclusion quant au réseau mobile utilisé ne soit possible et qu'il est prévu un renvoi d'appels (2) qui attribue à un numéro d'appel, propre à l'opérateur, du réseau mobile (4) choisi le numéro d'appel virtuel attribué à chaque abonné, étant précisé que pour la durée du test, on bloque ou on met hors service toutes les fonctions et tous les services donnant à l'abonné une indication concernant le réseau mobile utilisé,
**en ce que** le réseau mobile (4) choisi change à intervalles définis,
et **en ce qu'**un relevé de la qualité du réseau perçue par les abonnés (8) est effectué.

2. Procédé selon la revendication 1, **caractérisé en ce que** les réseaux mobiles (4) changent suivant un procédé de rotation.

3. Procédé selon l'une des revendications précédentes, **caractérisé en ce qu'**une anonymisation des réseaux mobiles est effectuée de la manière suivants :
- blocage de zones de numéros d'appel définis, afin d'empêcher des messages enregistrés propres aux opérateurs,
- blocage des numéros abrégés propres aux opérateurs,
- les caractéristiques techniques, propres aux terminaux, qui suppriment le blocage doivent être éliminées,
- blocage de l'affichage avec les indications automatisées des opérateurs et fournisseurs de services,
- élimination de la sélection automatique/manuelle du réseau ou de la sélection préréglée du réseau,
- blocage des caractéristiques, telles que SMS (MO, MT, CB), avec lesquelles le propre numéro d'appel peut être lu ou affiché,
- modification des profilés de cartes téléphoniques avec les services suivants : seulement téléphonie nationale, pas d'itinérance internationale au départ/à l'arrivée, pas de messagerie vocale, pas de service de télécopie/données, pas de SMS, élimination permanente de l'identification, pas de renvoi d'appels, blocage des numéros 0180/0190.

4. Procédé selon l'une des revendications précédentes, **caractérisé en ce que** les terminaux mobiles sont identiques et scellés.

5. Procédé selon l'une des revendications précédentes, **caractérisé en ce que** le relevé de la qualité du réseau se fait grâce à des interrogations des abonnés tests (8) qui sont quotidiennes, hebdomadaires, mensuelles et/ou fixées à un moment quelconque.

6. Procédé selon la revendication 5, **caractérisé en ce que** l'interrogation des abonnés tests (8) est effectuée par un poste central neutre (12).

7. Procédé selon la revendication 6, **caractérisé en ce que** dans le poste central (7) sont effectués un relevé, un traitement et une évaluation des résultats des interrogations.
